# EUROPEAN PATENT APPLICATION

(11) **EP 4 588 703 A1**
(43) Date of publication of application: **23.07.2025**
(21) Application number: 24766307.3
(22) Date of filing: 28.02.2024
(51) Int. Cl.: B60K 11/00, B60K 11/04, B60R 19/52, B62D 21/09

(54) **MOUNTING BRACKET ASSEMBLY, INCLINED COOLING MODULE ASSEMBLY AND VEHICLE**

(30) Priority: 08.03.2023 CN 202310239464
(71) Applicant: Chery Automobile Co., Ltd., Wuhu, Anhui 241006 (CN)
(72) Inventor: CHI, Ronghai, Wuhu, Anhui 241006 (CN); WANG, Feifei, Wuhu, Anhui 241006 (CN); GU, Zhuoqing, Wuhu, Anhui 241006 (CN); LI, Zhaojin, Wuhu, Anhui 241006 (CN); LI, Pengyao, Wuhu, Anhui 241006 (CN)
(74) Representative: Yang, Shu
(86) International application number: PCT/CN2024/079082
(87) International publication number: WO 2024/183585

(57) **Abstract**

A mounting bracket assembly (400), an inclined cooling module assembly (300) and a vehicle (1000). The mounting bracket assembly (400) comprises a first bracket (40), wherein the first bracket (40) comprises a first body part (41) and a first connecting part (42), the first body part (41) is connected to a front lower sub-beam (100) of the vehicle through a connector (44), and the first connecting part (42) is connected to the first body part (41) and also connected to the inclined cooling module (300) of the vehicle. The first body part (41) is provided with a mounting hole (411), the mounting hole (411) comprises a first sub-hole (412) and a second sub-hole (413), the first sub-hole (412) and the second sub-hole (413) are in communication through a guide slot (414), and the connector (44) penetrates through the mounting hole (411), and is configured to move from the first sub-hole (412) to the second sub-hole (413) when the front lower sub-beam (100) is stressed. When the vehicle (1000) has a low-speed collision, the front lower sub-beam (100) can drive the connector (44) to move from the first sub-hole (412) to the second sub-hole (413), such that a buffering effect on the inclined cooling module (300) can be achieved by virtue of a movement of the connector (44), thereby decreasing and even preventing the loss of the inclined cooling module (300), and lowering maintenance costs.

## Description

This application claims priority to Chinese Patent Application No. 202310239464.7, filed on March 8, 2023, and entitled "MOUNTING BRACKET ASSEMBLY, INCLINED COOLING MODULE ASSEMBLY AND VEHICLE," the disclosure of which is herein incorporated by reference in its entirety.

### TECHNICAL FIELD

The present disclosure relates to the field of vehicle technologies, and in particular, relates to a mounting bracket assembly, an inclined cooling module assembly, and a vehicle.

### BACKGROUND

In the related art, in more and more new energy vehicles, the cooling module is mounted in an inclined manner in order to have a trunk at the front compartment. Thus, the lower part of the cooling module is located in front of the front bumper cross member, and the front bumper cross member cannot protect the cooling module, resulting in that the cooling module is likely to be damaged in a low-speed collision and thus the maintenance cost is increased.

### SUMMARY

To this end, the present disclosure provides a mounting bracket assembly, an inclined cooling module assembly, and a vehicle. The solutions of embodiments of the present disclosure are as follows.

A first aspect of embodiments of the present disclosure provides a mounting bracket assembly. The mounting bracket assembly includes a first bracket, wherein the first bracket includes a first body portion and a first connecting portion, the first body portion is connected to a front-lower assistant cross member of a vehicle through a connecting member, and the first connecting portion is connected to the first body portion and an inclined cooling module of the vehicle; and wherein the first body portion is provided with a mounting hole, the mounting hole includes a first sub-hole and a second sub-hole, the first sub-hole and the second sub-hole are connected through a guide groove, and the connecting member is disposed in the mounting hole and configured to move from the first sub-hole towards the second sub-hole in a case that the front-lower assistant cross member is stressed.

According to the mounting bracket assembly in some embodiments of the present disclosure, the first sub-hole and the second sub-hole are arranged along a front-to-rear direction of the vehicle.

According to the mounting bracket assembly in some embodiments of the present disclosure, a width of the guide groove is smaller than a diameter of the first sub-hole and a diameter of the second sub-hole.

According to the mounting bracket assembly in some embodiments of the present disclosure, the first body portion and the first connecting portion are connected in a bent manner.

According to the mounting bracket assembly in some embodiments of the present disclosure, a connecting flange is disposed at a connect position of the first body portion and the first connecting portion, and the connecting flange is perpendicular to the first body portion and the first connecting portion; and
the connecting flange is configured to break when a force applied to the connecting flange exceeds a set threshold such that the first body portion is separated from the first connecting portion.

According to the mounting bracket assembly in some embodiments of the present disclosure, the number of the first brackets is two, and the two first brackets are respectively connected to two sides of a front end of the inclined cooling module.

According to the mounting bracket assembly in some embodiments of the present disclosure, the mounting bracket assembly further includes: a second bracket, the second bracket includes a second body portion and a second connecting portion, the second body portion is connected to a sub-frame of the vehicle, and the second connecting portion is connected to the second body portion and the inclined cooling module.

According to the mounting bracket assembly in some embodiments of the present disclosure, the number of the second brackets is two, and the two second brackets are respectively disposed at two sides of a rear end of the inclined cooling module.

According to the mounting bracket assembly in some embodiments of the present disclosure, the second body portion is an arc-shaped connecting bracket, an end portion of the arc-shaped connecting bracket is connected to the sub-frame, and a middle portion of the arc protrudes in a direction away from the sub-frame and connected to the second connecting portion.

According to the mounting bracket assembly in some embodiments of the present disclosure, the inclined cooling module has a snap-fit member, and the snap-fit member is detachably connected to the second connecting portion.

According to the mounting bracket assembly in some embodiments of the present disclosure, the snap-fit member includes a snap-fit groove, the second connecting portion passes through the snap-fit groove, and an inner surface of the snap-fit groove is provided with an elastic bulge protruding towards the second connecting portion and being abutted against the second connecting portion.

According to the mounting bracket assembly in some embodiments of the present disclosure, the second connecting portion includes a plurality of sub-connecting portions, the plurality of sub-connecting portions are successively connected, and an annular groove is provided at a connect position of any two adjacent sub-connecting portions.

According to the mounting bracket assembly in some embodiments of the present disclosure, the first bracket and the second bracket are spaced apart in a front-to-rear direction of the vehicle.

A second aspect of the embodiments of the present disclosure provides an inclined cooling module assembly.

The inclined cooling module assembly according to embodiments of the present disclosure includes: an inclined cooling module and a mounting bracket assembly, wherein the inclined cooling module is connected to the mounting bracket assembly, and the mounting bracket assembly is the mounting bracket assembly as defined in the first aspect.

A third aspect of the embodiments of the present disclosure provides a vehicle.

The vehicle according to the embodiments of the present disclosure includes: a front-lower assistant cross member, a sub-frame, and the inclined cooling module assembly as defined in the second aspect; and wherein, in a front-to-rear direction, the inclined cooling module assembly is connected to the front-lower assistant cross member at one side of the vehicle and is connected to the sub-frame at another side of the vehicle.

### BRIEF DESCRIPTION OF DRAWINGS

The above and/or additional aspects and advantages of the present disclosure will become apparent and easily understood from the description of the embodiments in conjunction with the following accompanying drawings, wherein:
FIG. 1 is a schematic diagram of an inclined cooling module assembly mounted on a vehicle according to some embodiments of the present disclosure;
FIG. 2 is a schematic diagram with a front bumper cross member being concealed on the basis of FIG. 1;
FIG. 3 is a side view of the inclined cooling module assembly in FIG. 1;
FIG. 4 is a schematic diagram at another viewing angle of the inclined cooling module assembly in FIG. 3;
FIG. 5 is a schematic diagram of a first bracket connected to a front frame of the inclined cooling module in FIG. 3;
FIG. 6 is a schematic diagram of the first bracket mounted to the inclined cooling module in FIG. 5;
FIG. 7 is a partially enlarged view of the first bracket connected to the front frame of the inclined cooling module in FIG. 5;
FIG. 8 is a schematic diagram of FIG. 7 at another viewing angle;
FIG. 9 is a schematic diagram of a connect position of a first body portion and a first connecting portion in FIG. 5;
FIG. 10 is an assembly diagram of a second bracket and a snap-fit member in FIG. 4;
FIG. 11 is a schematic diagram of the inclined cooling module assembly mounted on a vehicle shown in FIG. 2 in another view;
FIG. 12 is a schematic diagram of the snap-fit member in FIG. 10 mounted to the inclined cooling module;
FIG. 13 is an enlarged view of the connecting member in FIG. 1 in the case of being located in a first sub-hole;
FIG. 14 is an enlarged view of the connecting member in FIG. 1 in the case of being located in a second sub-hole;
FIG. 15 is a top view of FIG. 13;
FIG. 16 is a top view of FIG. 13;
FIG. 17 is a schematic diagram of the first bracket before breaking according to some embodiments of the present disclosure;
FIG. 18 is a schematic diagram of the first bracket in FIG. 17 upon breaking;
FIG. 19 is a schematic diagram of replacing the first bracket according to some embodiments of the present disclosure;
FIG. 20 is a schematic diagram of the first bracket in FIG. 19 in the case that the first bracket has been replaced;
FIG. 21 is a schematic diagram of another view of the second bracket shown in FIG. 10 in the case that the second bracket is mounted to the snap-fit member;
FIG. 22 is a schematic diagram of the second bracket in FIG. 21 upon breaking;
FIG. 23 is a schematic diagram of the second bracket being replaced according to some embodiments of the present disclosure;
FIG. 24 is a schematic diagram of the inclined cooling module assembly mounted on a vehicle according to some embodiments of the present disclosure;
FIG. 25 is a schematic diagram of the inclined cooling module in FIG. 24 in the case of being detached from the vehicle;
FIG. 26 is a schematic diagram of a vehicle according to some embodiments of the present disclosure; and
FIG. 27 is a schematic diagram of another vehicle according to some embodiments of the present disclosure.

### DETAILED DESCRIPTION

Embodiments of the present disclosure are described in detail hereinafter, and examples of the embodiments are shown in the accompanying drawings, wherein the same or similar reference signs throughout denote the same or similar elements or elements having the same or similar function. The embodiments described hereinafter by reference to the accompanying drawings are exemplary and are intended to be used only for the purpose of explaining the present disclosure and are not to be understood as a limitation on the present disclosure.

The following disclosure provides many different embodiments or examples to achieve different structures of the present disclosure. To simplify the present disclosure, the portions and settings of particular examples are described below. They are, of course, only examples and are not intended to limit the present disclosure. Furthermore, the present disclosure sometimes repeats reference numbers and/or letters in different examples. Such repetition is for purposes of simplicity and clarity and is not in itself indicating a relationship between the various embodiments and/or settings discussed. In addition, various specific examples of processes and materials are provided in the present disclosure, but one of ordinary skill in the art can know the applicability of other processes and/or the use of other materials.

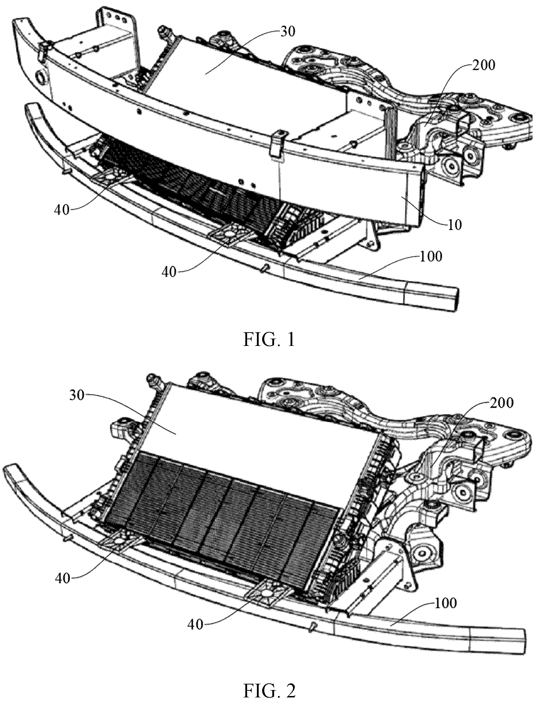

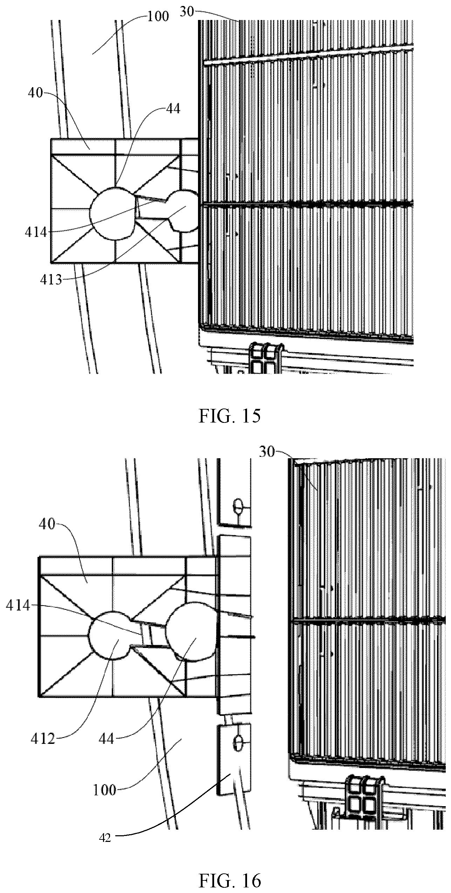

A mounting bracket assembly 400 according to the embodiments of the present disclosure is described hereinafter with reference to FIGS. 1 to 27.

FIG. 1 is a schematic diagram of an inclined cooling module assembly according to some embodiments of the present disclosure mounted on a vehicle, and FIG. 2 is a schematic diagram with a front bumper cross member being concealed on the basis of FIG. 1. As shown in FIGS. 1 and 2, the mounting bracket assembly 400 according to the embodiments of the present disclosure includes: at least one first bracket 40.

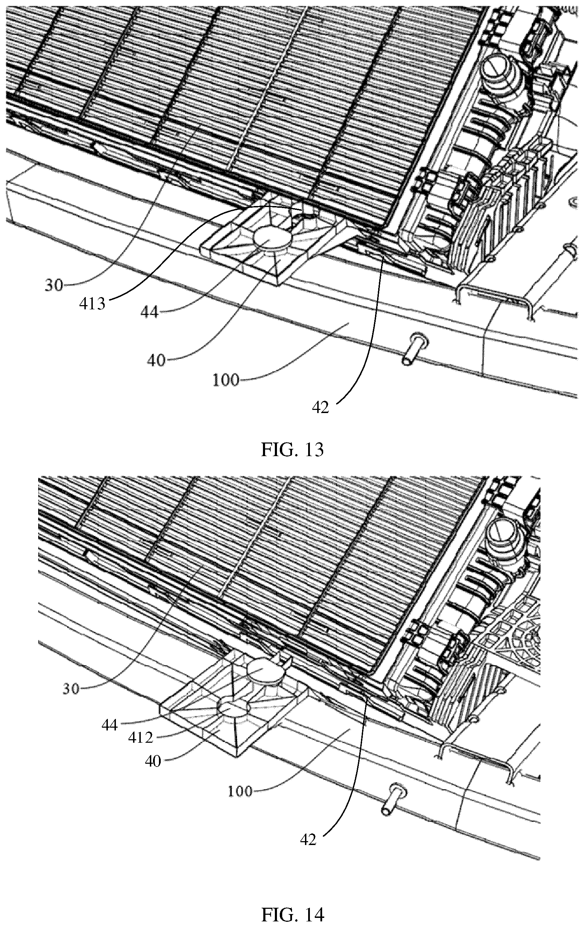

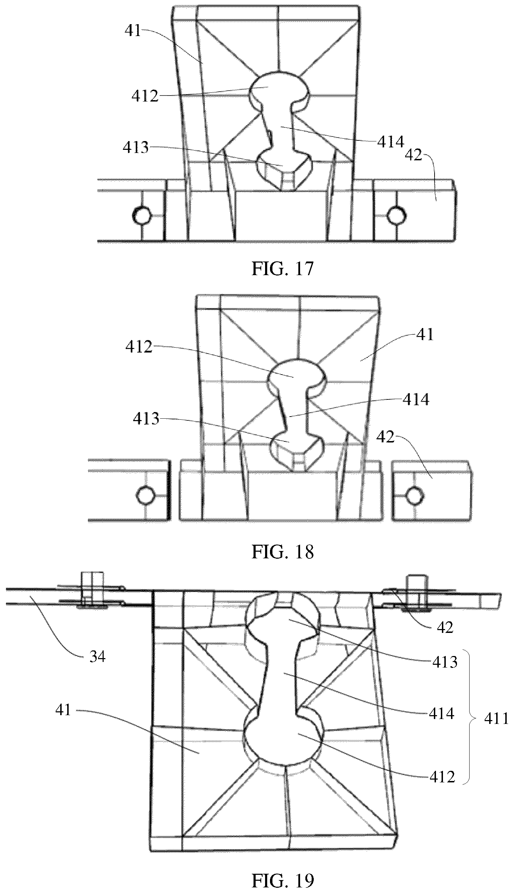

As shown in FIGS. 17 to 19, the first bracket 40 includes a first body portion 41 and a first connecting portion 42; and referring to FIGS. 13 to 16, the first body portion 41 of the first bracket 40 is connected to a front-lower assistant cross member 100 of a vehicle through a connecting member 44, and the first connecting portion 42 is connected to the first body portion 41 and the inclined cooling module 30; wherein, as shown in FIG. 19, the first body portion 41 is provided with a mounting hole 411, the connecting member 44 is adapted to pass through the mounting hole 411, the mounting hole 411 includes a first sub-hole 412, a second sub-hole 413, and a guide groove 414, the first sub-hole 412 and the second sub-hole 413 are connected through the guide groove 414, and the connecting member 44 is configured to move from the first sub-hole 412 towards the second sub-hole 413 in a case that the front-lower assistant cross member 100 is stressed. Further, a width of the guide groove 414 is smaller than a diameter of the first sub-hole 412 and a diameter of the second sub-hole 413. Further, the width of the guide groove 414 is also slightly smaller than a diameter of the connecting member 44. In some embodiments, a groove width of the guide groove 414 is 60%-90% of the diameter of the connecting member 44. In some embodiments, the groove width of the guide groove 414 is 70%-80% of the diameter of the connecting member 44.

In this way, in the case that the vehicle 1000 undergoes a low-speed collision resulting in a force on the front-lower assistant cross member 100, the front-lower assistant cross member 100 drives the connecting member 44 mounted in the first sub-hole 412 to move towards the second sub-hole 413 under the action of the force. Therefore, the front-lower assistant cross member 100 is prevented from squeezing the inclined cooling module 30, and the first bracket 40 is facilitated to act as a cushion of the inclined cooling module 30 during the low-speed collision, thereby reducing the damage to the inclined cooling module 30.

It should be noted that typically, a low-speed collision refers to a head-on collision with a speed smaller than 15 kilometers per hour.

In some embodiments, the mounting bracket assembly 400 includes one first bracket 40, the first bracket 40 is disposed between the front-lower assistant cross member 100 of the vehicle and the inclined cooling module 30, and the connecting member 44 passes through the first sub-hole 412 and fixedly connected to the front-lower assistant cross member 100.

In the front-to-rear direction of the vehicle 1000, the front-lower assistant cross member 100 protrudes over the inclined cooling module 30, i.e., at least a portion of the front-lower assistant cross member 100 is in front of the inclined cooling module 30. In the height direction of the vehicle 1000, a front end of the inclined cooling module 30 is higher than the front-lower assistant cross member 100, such that in the event of a low-speed collision of the vehicle 1000, the front-lower assistant cross member 100 is hit first, and in the case that the front-lower assistant cross member 100 is impacted, the connecting member 44 is driven by the front-lower assistant cross member 100 to move from the first sub-hole 412 along the guide groove 414 towards the second sub-hole 413, thereby avoiding the front-lower assistant cross member 100 from squeezing the inclined cooling module 30, allowing the inclined cooling module 30 to be cushioned to a certain extent, and thus reducing the low-speed collision damage of the inclined cooling module 30.

In some embodiments, an extension direction of the guide groove 414 is the same as the direction of force on the front-lower assistant cross member 100 in the case that the vehicle 1000 undergoes a low-speed collision. Therefore, when the connecting member 44 moves from the first sub-hole 412 towards the second sub-hole 413 along the guide groove 414, the movement direction of the connecting member 44 is the same as the direction force on the front-lower assistant cross member 100. Thus, part of the collision energy can be consumed through the movement of the connecting member 44, thereby cushioning the inclined cooling module 30.

It should be noted that in the embodiments, the inclined cooling module 30 is mounted with a front end of the module lower than a rear end of the module, i.e., mounted in an inclined manner, so as to provide installation space for the trunk at the front compartment of the vehicle 1000. At the same time, the inclined cooling module 30 is connected to the front-lower assistant crossbeam 100 through the first bracket 40 and the connecting member 44.

Accordingly, upon being arranged in the vehicle 1000, the inclined cooling module 30 is protected by the first bracket 40, which lowers the extent of damage to the inclined cooling module 30 in the event of low-speed collision.

In some embodiments, the number of the first brackets 40 is two or more, such as two, three, or even more. In the case that the number of the first brackets 40 is two or more, the two or more first brackets 40 are spaced apart along a width direction of the vehicle 1000. In some embodiments, the two or more first brackets 40 are equally spaced apart along the width direction of the vehicle 1000 to improve the force uniformity.

In this way, in the case that the number of the first brackets 40 is two or more, the two or more first brackets 40 go shares the force applied to the vehicle 1000 in a low-speed collision, which makes the forces subjected by the inclined cooling module 30 more uniform and reduces the collision force subjected by each of the first brackets 40, thereby avoiding a situation in which the inclined cooling module 30 is locally subjected to an excessive force resulting in a localized damage.

In some embodiments, as shown in FIGS. 1 and 2, the number of the first bracket 40 is two, and the two first brackets 40 are respectively connected to two sides of the front end of the inclined cooling module 30.

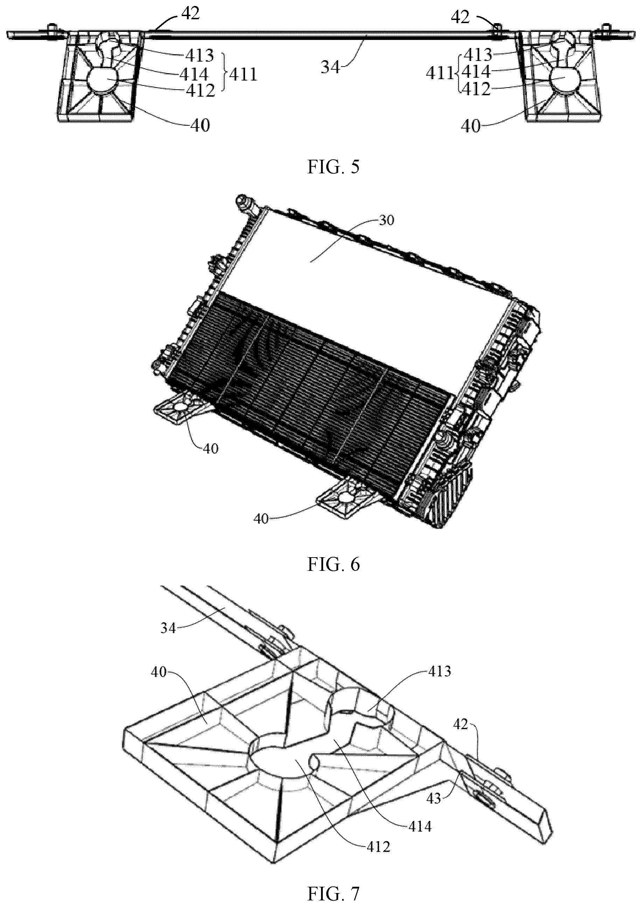

Further, as shown in FIG. 5, a front frame 34 is disposed at the front end of the inclined cooling module 30, the first connecting portion 42 of the first bracket 40 is detachably connected to the front frame 34, the mounting hole 411 on the first body portion 41 of the first bracket 40 includes a first sub-hole 412 and a second sub-hole 413, and the first sub-hole 412 and the second sub-hole 413 are connected through a guide groove 414. In the case that the connecting member 44 is mounted in the first sub-hole 412, upon the front-lower assistant cross member 100 of the vehicle being subjected to a low-speed collision, under the action of the collision force, the front-lower assistant cross member 100 drives the connecting member 44 to move from the first sub-hole 412 along the guide groove 414 towards the second sub-hole 413, which makes the first bracket 40 serve as a cushion for the inclined cooling module 30 to some extent during a low-speed collision of the vehicle 1000, thereby reducing the low-speed collision damage formed on the inclined cooling module 30.

In some embodiments, the connecting member 44 can be implemented in various forms, such as a bolt or a riveting member, and at the same time, the first bracket 40 can be connected to the front frame 34 in various connection forms, such as a bolt connection or a riveted connection, which are not limited herein. In some embodiments, the connecting member 44 in this embodiment is constructed as a bolt, the bolt is fixedly connected to the front-lower assistant cross member 100, and the bolt is slidably mounted in the mounting hole 411.

According to the mounting bracket assembly 400 of the embodiments of the present disclosure, by disposing the first bracket 40 between the front-lower assistant cross member 100 of the vehicle and the inclined cooling module 30, the front-lower assistant cross member 100 is able to drive the connecting member 44 to move from the first sub-hole 412 towards the second sub-hole 413 during a low-speed collision of the vehicle 1000, which avoids the front-lower assistant cross member 100 from squeezing the inclined cooling module 30 and achieves a cushioning effect for the inclined cooling module 30 through the movement of the connecting member 44, thereby reducing damage to the inclined cooling module 30 and facilitating the reduction of maintenance costs.

In some embodiments, as shown in FIGS. 6 to 8, the first sub-hole 412 and the second sub-hole 413 are arranged along a front-to-rear direction of the vehicle 1000. That is, in the front-to-rear direction of the vehicle, the first sub-hole 412 is in front of the second sub-hole 413 1000, and the guide groove 414 connects a rear side of the first sub-hole 412 with a front side of the second sub-hole 413.

It is noted that by arranging the first sub-hole 412 and the second sub-hole 413 along the front-to-rear direction of the vehicle 1000, in the case that the vehicle 1000 is subjected to a head-on low-speed collision along the front-to-rear direction of the vehicle 1000, the first sub-hole 412 and the second sub-hole 413 arranged along the front-to-rear direction of the vehicle 1000 cause the connecting member 44 to move within the mounting hole 411 along the same direction as the force subjected by the vehicle 1000, thereby achieving a better cushioning effect of the first bracket 40 to protect the inclined cooling module 30.

Thus, the first sub-hole 412 and the second sub-hole 413 arranged along the front-to-rear direction of the vehicle 1000 enable the first bracket 40 to be more effective in cushioning the inclined cooling module 30 and thereby protecting the inclined cooling module 30.

In some embodiments, as shown in FIGS. 7 to 9 and FIGS. 13 to 20, the first body portion 41 and the first connecting portion 42 are connected in a bent manner.

It should be noted that, as shown in FIGS. 7 to 9, a connecting flange 43, which is perpendicular to the first body portion 41 and the first connecting portion 42, is disposed at a connect position of the first body portion 41 and the first connecting portion 42, that is, the connecting flange 43 causes the first body portion 41 and the first connecting portion 42 to be connected in a bent manner. Upon the connecting member 44 moving into the second sub-hole 413 under the driving of the front-lower assistant cross member 100, in the case that the front-lower assistant cross member 100 continues to be subjected to a force, the force formed in the low-speed collision will further act on the connecting flange 43; and in the case that a force applied to the connecting flange 43 exceeds a set threshold, the connecting flange 43 breaks, such that the first body portion 41 is separated from the first connecting portion 42.

Further, the connecting flange 43 is disposed at a force concentration region of the first bracket 40, such that in the case that the front-lower assistant cross member 100 continues to be subjected to a force, in the case that the front-lower assistant cross member 100 continues to be subjected to an external force, the connecting flange 43 breaks, such that the inclined cooling module 30 is separated from the front-lower assistant cross member 100, at this time the inclined cooling module 30 is able to be detached from the vehicle 1000, and thus damage to the inclined cooling module 30 is avoided.

As a result, in the event of a low-speed collision of the vehicle 1000, the movement of the connecting member 44 between the first sub-hole 412 and the second sub-hole 413 driven by the front-lower assistant cross member 100 first partially consumes the collision energy, i.e., achieving a cushioning effect for the front-lower assistant cross member 100, and upon the cushioning, in the case that the front-lower assistant cross member 100 continues to be subjected to a force, the connecting flange 43 of the first bracket 40 breaks, such that the inclined cooling module 30 is separated from the front-lower assistant cross member 100, thereby allowing the front end of the inclined cooling module 30 to be detached from the vehicle 1000, and thus avoiding the inclined cooling module 30 from continuing to be subjected to the low-speed collision.

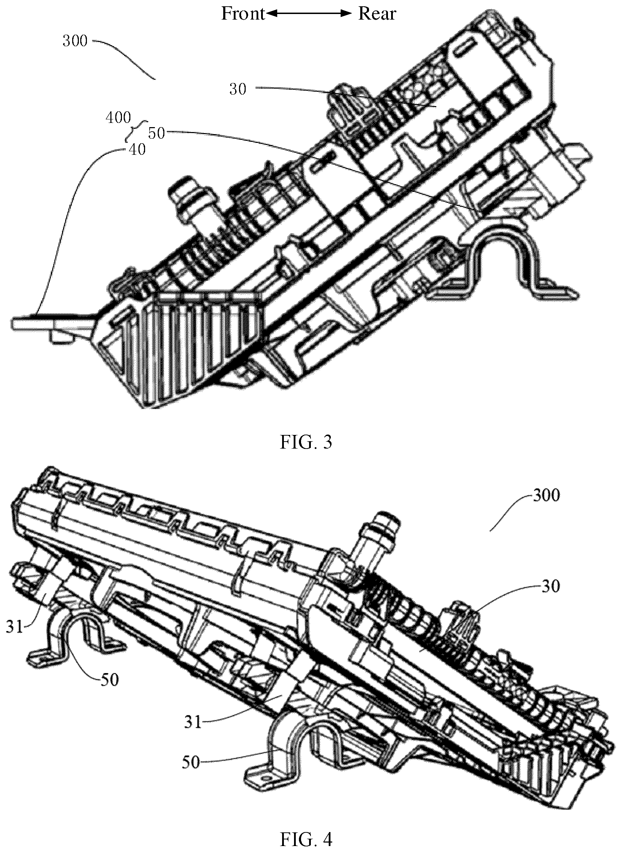

In some embodiments, as shown in FIGS. 3 and 4, the mounting bracket assembly 400 further includes: at least one second bracket 50, and the second bracket 50 is disposed at a side, away from the first bracket 40, of the inclined cooling module 30, i.e., at a rear side of the inclined cooling module 30.

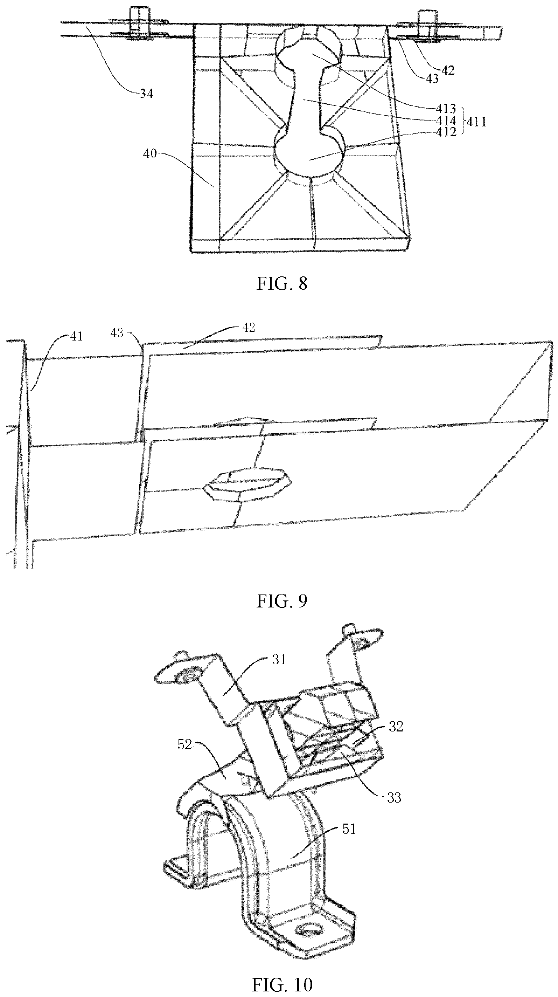

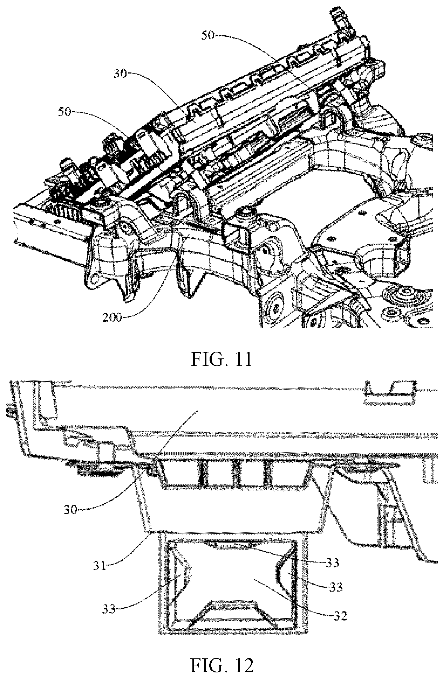

As shown in FIGS. 10 and 11, the second bracket 50 includes a second body portion 51 and a second connecting portion 52, the second body portion 51 is connected to the sub-frame 200 of the vehicle, and the second connecting portion 52 is connected to the second body portion 51 and the inclined cooling module 30.

Therefore, the second bracket 50 is disposed between the sub-frame 200 of the vehicle and the inclined cooling module 30. Because the sub-frame 200 of the vehicle is higher than the front-lower assistant cross member 100 of the vehicle, when the inclined cooling module 30 is connected to the sub-frame 200, the rear end of the inclined cooling module 30 is higher than the front end thereof, and a trunk can be provided at the front compartment of the vehicle 1000.

In some embodiments, the mounting bracket assembly 400 includes one second bracket 50, the second bracket 50 is disposed between the sub-frame 200 of the vehicle and the rear end of the inclined cooling module 30, the second body portion 51 of the second bracket 50 is connected to the sub-frame 200, and the second connecting portion 52 of the second bracket 50 is connected to the inclined cooling module 30. At the same time, a first bracket 40 is disposed at the front end of the inclined cooling module 30, and the inclined cooling module 30 is mounted to the vehicle 1000 through both the first bracket 40 and the second bracket 50.

In some embodiments, the number of the second brackets 50 is two or more, such as two, three, or even more. In the case that the number of the second brackets 50 is two or more, the two or more second brackets 50 are spaced apart along a width direction of the vehicle 1000. In some embodiments, the two or more first brackets 40 are equally spaced apart along the width direction of the vehicle 1000 to improve the force uniformity.

In this way, in the case that the number of the second brackets 50 is two or more, the two or more second brackets 50 go shares the force subjected by the vehicle 1000 in a low-speed collision, which makes the forces subjected by the inclined cooling module 30 more uniform and reduces the collision force subjected by each first bracket 40, thereby avoiding a situation in which the inclined cooling module 30 is locally subjected to an excessive force resulting in localized damage.

In some embodiments, as shown in FIGS. 4 and 11, the number of the second brackets 50 is two, and the two second brackets 50 are respectively connected to two sides of the rear end of the inclined cooling module 30.

In some embodiments, the second body portion 51 is constructed as an arc-shaped connecting bracket, wherein an end portion of the arc-shaped connecting bracket is connected to the sub-frame 200 through a bolt, and a middle portion of the arc-shaped connecting bracket protrudes in a direction away from the sub-frame 200, i.e., the rear end of the inclined cooling module 30 is located at the protruding side of the arc-shaped connecting bracket, the sub-frame 200 is located at the depressed side of the arc-shaped connecting bracket, and the second connecting portion 52 is connected to the middle portion of the arc-shaped connecting bracket, which facilitate improving the height of the second connecting portion 52 and making the second connecting portion 52 be better connected to the rear end of the inclined cooling module 30.

In some embodiments, as shown in FIGS. 10 to 12, the inclined cooling module 30 has a snap-fit member 31, wherein the snap-fit member 31 is detachably connected to the second connecting portion 52.

This makes it more convenient to connect the inclined cooling module 30 to the second connecting portion 52 and improves the maintenance efficiency of subsequent demounting and maintenance.

In some embodiments, the snap-fit member 31 is connected to the inclined cooling module 30 in a variety of forms, such as bolt connection or riveted connection. The connection can be implemented in a variety of forms, which are not described in detail here. In this embodiment, a bolt connection is used to achieve the connection.

In some embodiments, the snap-fit member 31 and the second connecting portion 52 respectively include one and the other of a snap-fit groove and a fixture block, so as to achieve the snap-fit connection, wherein the snap-fit groove is a through groove or a non-through groove.

In other embodiments, as shown in FIGS. 10 and 12, the snap-fit member 31 is provided with a snap-fit groove 32, the second connecting portion 52 passes through the snap-fit groove 32, and an inner surface of the snap-fit groove 32 is provided with an elastic bulge 33 protruding towards the second connecting portion 52 and being abutted against the second connecting portion 52.

As a result, the second connecting portion 52 is snap-fastened in the snap-fit groove 32 through the elastic bulge 33 at the inner surface of the snap-fit groove 32, and at the same time, the elastic bulge 33 is able to reduce the vibration of the inclined cooling module 30, so as to reduce the vibration of the inclined cooling module 30 transmitted to the cockpit of the vehicle 1000.

In some embodiments, the number of the elastic bulges 33 disposed at the inner surface of the snap-fit groove 32 is set to be two or more depending on requirements. Illustratively, in some embodiments, four elastic bulges 33 are disposed at the inner surface of the snap-fit groove 32, and the four elastic bulges 33 are arranged in a circumferential direction at the inner surface of the snap-fit groove 32.

In some embodiments, the elastic bulge 33 is constructed as rubber blocks, internally provided with a spring, or other forms, which are not described in detail herein. Illustratively, in some embodiments, the elastic bulge 33 is constructed from a rubber block. The elastic bulge 33 being constructed from a rubber block includes but is not limited to, a portion of the elastic bulge 33 that abuts against the snap-fit member 31 being constructed as a rubber block, or the elastic bulge 33 as a whole being constructed from rubber.

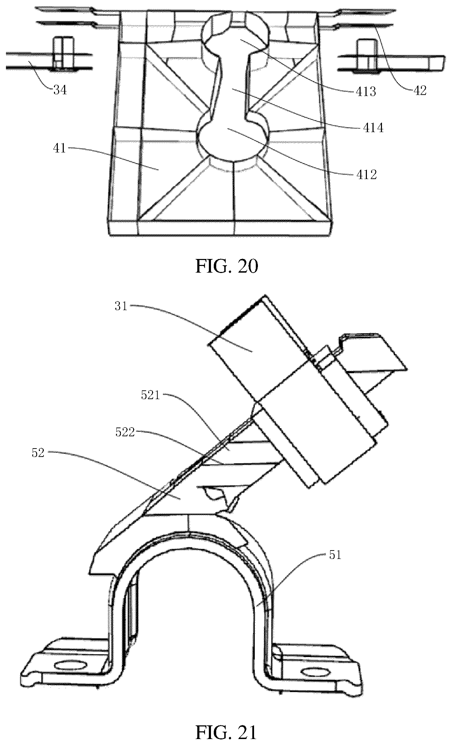

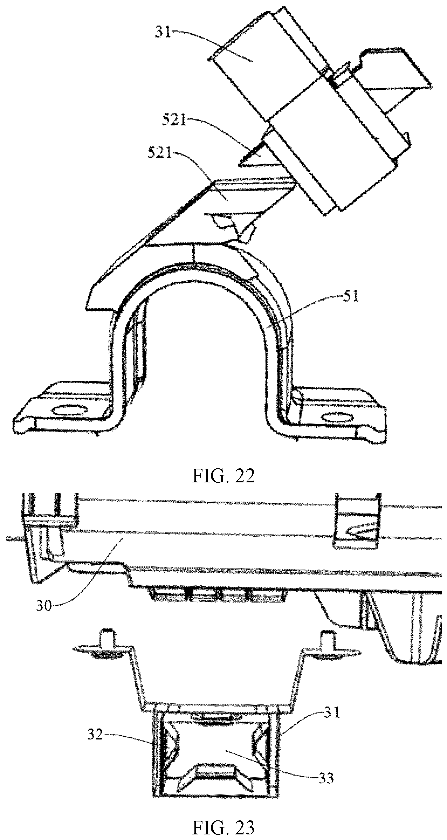

In some embodiments, as shown in FIGS. 21 and 22, the second connecting portion 52 includes at least two sub-connecting portions 521, wherein the at least two sub-connecting portions 521 are successively connected, and an annular groove 522 is provided at a connect position of any two adjacent sub-connecting portions 521.

Specifically, the plurality of sub-connecting portions 521 are sequentially connected to form the second connecting portion 52, an annular groove 522 is provided at the connect position of two adjacent sub-connecting portions 521, and at the same time, a plane where the annular groove 522 is located is parallel to the plane where the front-to-rear direction of the vehicle 1000 is located. In a low-speed collision of the vehicle 1000, a force subjected by the inclined cooling module 30 causes a force on the second sub-connecting portion 52. At this time, due to the lower structural strength of the annular groove 522 between adjacent sub-connecting portions 521 relative to other positions of the sub-connecting portion 521, the second connecting portion 52 breaks at the position of the annular groove 522 under the act of an external force, thus causing the second connecting portion 52 to directly break, thereby separating the inclined cooling module 30 from the sub-frame 200.

As a result, upon the plurality of sub-connecting portions 521 of the second connecting portion 52 being connected, the annular groove 522 at the connect position of two adjacent sub-connecting portions 521 directly breaks in the event of a low-speed collision of the vehicle 1000, such that the second bracket 50 separates the inclined cooling module 30 from the sub-frame 200 in the case of the vehicle being subjected to the low-speed collision, thereby enabling the inclined cooling bracket to be detached from the vehicle 1000. Therefore, the inclined cooling module 30 is not involved in subsequent deformation, and thus damage to the inclined cooling module 30 is avoided.

In some embodiments, the second connecting portion 52 of the second bracket 50 is hollow, which makes it easier for the sub-connecting portion 521 to break in the case that the second connecting portion 52 is subjected to a force. At the same time, the annular groove 522 of the sub-connecting portion 521 is located at a maximum deformation position of the second connecting portion 52, such that in the case that the vehicle 1000 is subjected to a low-speed collision, the force acting on the second bracket 50 is concentrated at the annular groove 522 of the sub-connecting portion 521, which makes it easier for the second bracket 50 to break, thereby allowing the inclined cooling module 30 to be separated from the sub-frame 200 in the event of a low-speed collision of the vehicle 1000.

In some embodiments, as shown in FIG. 3, the first bracket 40 and the second bracket 50 are spaced apart in a front-to-rear direction of the vehicle 1000.

Specifically, the first bracket 40 and the second bracket 50 are spaced apart in the front-to-rear direction of the vehicle 1000, such that the first bracket 40 and the second bracket 50 work together to secure the inclined cooling module 30 to the vehicle 1000. In the event of a low-speed collision of the vehicle 1000, the first bracket 40 first serves as a cushion to protect the inclined cooling module 30; in the case that the vehicle 1000 continues to be subjected to a force upon the cushioning of the first bracket 40, the first bracket 40 first breaks, making the front end of the inclined cooling module 30 be detached from the vehicle 1000; and in the case that the vehicle continues to be subjected to a force upon the breaking of the first bracket 40, the second bracket 50 breaks, making the back end of the inclined cooling module 30 be detached from the vehicle 1000 and thus the inclined cooling module 30 be detached from the vehicle 1000. Therefore, the inclined cooling module 30 is not involved in the subsequent deformation of the front end of the vehicle 1000, and thus the damage to the inclined cooling module 30 is avoided.

As a result, the first bracket 40 and the second bracket 50 are spaced apart in the front-to-rear direction of the vehicle 1000 to secure the inclined cooling module 30 to the vehicle 1000. At the same time, in the case that the vehicle 1000 is subjected to a low-speed collision, the first bracket 40 is able to serve as a cushion; and in the case that the vehicle continues to be subjected to a force upon the cushioning, the first bracket 40 and the second bracket 50 break sequentially, enabling the inclined cooling module 30 to be detached from the vehicle 1000. Therefore, the deformation degree of the inclined cooling module 30 caused by squeezing is decreased obviously, and thus the maintenance cost is reduced.

The present disclosure further provides an inclined cooling module assembly 300.

As shown in FIGS. 3 and 4, the inclined cooling module assembly 300 according to the embodiments of the present disclosure includes: an inclined cooling module 30 and a mounting bracket assembly 400, wherein the mounting bracket assembly 400 is constructed as the mounting bracket assembly 400 of any one of the above-described embodiments. The mounting bracket assembly 400 includes a first bracket 40 and a second bracket 50, wherein the first bracket 40 is mounted between a front-lower assistant cross member 100 and the inclined cooling module 30, and the second bracket 50 is mounted between a sub-frame 200 and the inclined cooling module 30.

It is noted that the inclined cooling module 30 is fixed to the vehicle 1000 through the mounting bracket assembly 400, i.e., the first bracket 40 and the second bracket 50, such that the first bracket 40 serves as a cushion in the event of a low-speed collision of the vehicle 1000, thereby protecting the inclined cooling module 30.

Further, in the case that the vehicle 1000 continues to be subjected to a force upon the cushioning of the first bracket 40, the first bracket 40 and the second bracket 50 break sequentially, such that the inclined cooling module 30 is detached from the vehicle 1000. Therefore, the deformation degree of the inclined cooling module 30 caused by squeezing is obviously decreased, and thus the maintenance cost is reduced.

According to the inclined cooling module assembly 300 of the embodiments of the present disclosure, in the event of a low-speed collision of the vehicle 1000, the mounting bracket assembly 400 first serves as a cushion to protect the inclined cooling module 30, and in the case that the vehicle 1000 continues to be subjected to a force upon the cushioning, the first bracket 40 and the second bracket 50 of the mounting bracket assembly 400 break sequentially, such that the inclined cooling module 30 is detached from the vehicle 1000. Therefore, the inclined cooling module 30 is no longer involved in the deformation of the front end of the vehicle 1000, and the deformation of the inclined cooling module 30 caused by squeezing is relieved, thereby reducing the maintenance cost.

In some embodiments, as shown in FIG. 19, FIG. 20, and FIG. 23, the inclined cooling module 30 is mounted on the vehicle 1000 through the mounting bracket assembly 400, and in the case that the mounting bracket assembly 400 breaks upon a low-speed collision of the vehicle 1000, the broken mounting bracket assembly 400 is replaced by a new mounting bracket assembly in subsequent maintenance, such that the inclined cooling module 30 is able to be mounted on the vehicle 1000 again, which reduces the maintenance costs.

It is understood that in the case that the mounting bracket assembly 400 breaks, in subsequent maintenance of the vehicle 1000, the inclined cooling module 30 is mounted on the vehicle 1000 again by simply replacing the broken mounting bracket assembly 400 with a new mounting bracket assembly 400, which reduces the maintenance cost of the inclined cooling module 30.

The present disclosure further provides a vehicle 1000.

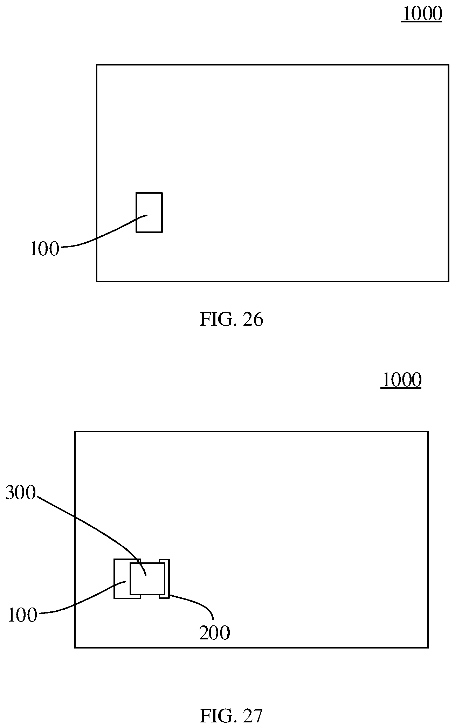

As shown in FIGS. 26 to 27, the vehicle 1000 according to the embodiments of the present disclosure includes: an inclined cooling module assembly 300 as defined in the above-described embodiments.

According to the vehicle 1000 of some embodiments of the present disclosure, the inclined cooling module assembly 300 in the vehicle 1000 includes an inclined cooling module 30 and a mounting bracket assembly 400, the mounting bracket assembly 400 includes a first bracket 40 and a second bracket 50, the first bracket 40 is disposed between the front-lower assistant cross member 100 and the inclined cooling module 30 of the vehicle, the mounting hole 411 on the first body portion 41 includes a first sub-hole 412 and a second sub-hole 413, the first sub-hole 412 and the second sub-hole 413 are connected through a guide groove 414, and the connecting member 44 is mounted in the first sub-hole 412, such that the first body portion 41 is connected to the front-lower assistant cross member 100. In the event of a low-speed collision of the vehicle 1000, the inclined cooling module 30 is able to drive the connecting member 44 to move from the first sub-hole 412 towards the second sub-hole 413, such that the movement of the connecting member 44 servers a cushion for the inclined cooling module 30, thereby decreasing the damage of the inclined cooling module 30 and reducing the maintenance cost.

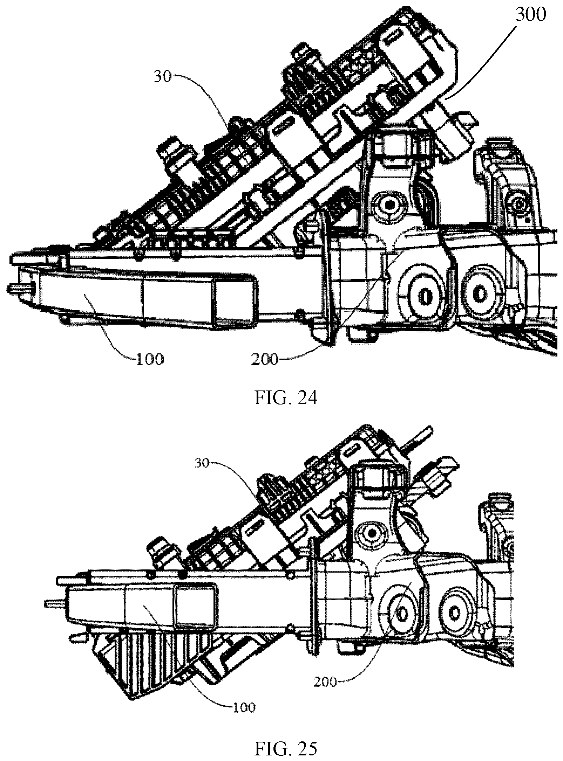

According to the vehicle 1000 of the embodiments of the present disclosure, as shown in FIG. 24, the inclined cooling module assembly 300 is mounted on the vehicle 1000. In the case that the vehicle 1000 is subjected to a low-speed collision, as shown in FIGS. 13 to 16, the first bracket 40 of the mounting bracket assembly 400 first serves as a cushion for the inclined cooling module 30, thereby reducing the damage to the inclined cooling module 30, and in the case that the inclined cooling module 30 continues to be subjected to a force upon the cushioning of the first bracket, the first bracket 40 breaks under the action of the external force, thereby allowing the front end of the inclined cooling module 30 to first be detached from the vehicle 1000.

As shown in FIGS. 3, 4, and 10, in the case that the vehicle 1000 continues to be subjected to a force upon the breaking of the first bracket 40, the second bracket 50 at the rear end of the inclined cooling module 30 further breaks under the force, causing the inclined cooling module 30 to be detached from the vehicle 1000 in its entirety. As shown in FIGS. 21 and 22, the breakage of the second bracket 50 of the inclined cooling module assembly 300 makes the inclined cooling module 30 be separated from the vehicle 1000, and because the first bracket 40 broke first, there is no connection point between the inclined cooling module 30 and the vehicle 1000. At this time, as shown in FIG. 25, the inclined cooling module 30 is detached from the vehicle 1000, which prevents the inclined cooling module 30 from excessive squeezing, reduces the deformation, and lowers the maintenance costs. During the maintenance of the vehicle 1000, the inclined cooling module 30 is mounted on the vehicle 1000 again by simply replacing the damaged mounting bracket assembly 400 with a new mounting bracket assembly 400.

In the description of the present disclosure, it is to be understood that the terms "center," "longitudinal," "lateral," "length," "width," "thickness," "up," "down," "front," rear," "left," "right," "vertical," "horizontal," "top," "bottom," "inner," "outer," "clockwise," "counterclockwise," "axial," "radial," "circumferential," etc. indicate orientations or positional relationships based on those shown in the accompanying drawings, are intended only to facilitate and simplify the description of the present disclosure, and are not intended to indicate or imply that the device or element referred to must have a particular orientation or be constructed and operated in a particular orientation. Therefore, the above terms cannot be understood as a limitation to the present disclosure.

Furthermore, the terms "first" and "second" are used for descriptive purposes only and are not to be understood as indicating or implying relative importance or implicitly specifying the number of technical features indicated. Thus, a feature defined with "first" or "second" can include one or more such features, either explicitly or implicitly. In the description of the present disclosure, "a plurality of" means two or more, unless otherwise expressly and specifically limited.

In the present disclosure, unless otherwise expressly specified and limited, the terms "mount," "connect," "secure," "fix," and the like should be understood in a broad sense, which include a fixed connection, a detachable connection, or integrating into one; a mechanical connection, an electrical connection, or communication; or a direct connection, an indirect connection through an intermediate medium, or connectivity within two elements or an interactive relationship between two elements. For those of ordinary skill in the art, the specific meaning of the above terms in the present disclosure is understood according to an actual situation.

In the present disclosure, unless otherwise expressly specified and limited, a first feature being "on" or "under" a second feature includes a direct contact between the first and second features, or an indirect contact between the first and second features through an intermediate medium. Furthermore, the first feature being "above," "on top of," and "on" the second feature means that the first feature is directly above or diagonally above the second feature, or simply means that the first feature is horizontally higher than the second feature. The first feature being "below," "under," and "underneath" the second feature means that the first feature is directly below or diagonally below the second feature, or simply means that the first feature is horizontally lower than the second feature.

In the description of the present disclosure, reference terms "an embodiment," "some embodiments," "examples," "specific examples," or "some examples," or the like means that the specific feature, structure, material, or characteristic described in conjunction with the embodiment or example is included in at least one embodiment or example of the present disclosure. In the description, schematic expressions of the above terms do not necessarily refer to the same embodiment or example. Moreover, the specific features, structures, materials, or characteristics described are combined in any one or more embodiments or examples in a suitable manner. Moreover, without contradicting each other, those skilled in the art can integrate and combine different embodiments or examples and features of different embodiments or examples described in the description.

Although embodiments of the present disclosure have been shown and described, it is understood by those of ordinary skill in the art that a variety of changes, modifications, substitutions, and variations can be made to these embodiments without departing from the principles and purposes of the present disclosure, and that the scope of the present disclosure is limited by the claims and their equivalents.

## Claims

1. A mounting bracket assembly (400), comprising a first bracket (40), wherein the first bracket (40) comprises a first body portion (41) and a first connecting portion (42), the first body portion (41) is connected to a front-lower assistant cross member (100) of a vehicle through a connecting member (44), and the first connecting portion (42) is connected to the first body portion (41) and an inclined cooling module (30) of the vehicle; and
wherein the first body portion (41) is provided with a mounting hole (411), the mounting hole (411) comprises a first sub-hole (412) and a second sub-hole (413), the first sub-hole (412) and the second sub-hole (413) are connected through a guide groove (414), and the connecting member (44) is disposed in the mounting hole (411) and configured to move from the first sub-hole (412) towards the second sub-hole (413) in a case that the front-lower assistant cross member (100) is stressed.

2. The mounting bracket assembly (400) according to claim 1, wherein the first sub-hole (412) and the second sub-hole (413) are arranged along a front-to-rear direction of the vehicle.

3. The mounting bracket assembly (400) according to claim 1, wherein a width of the guide groove (414) is smaller than a diameter of the first sub-hole (412) and a diameter of the second sub-hole (413).

4. The mounting bracket assembly (400) according to claim 1, wherein the first body portion (41) and the first connecting portion (42) are connected in a bent manner.

5. The mounting bracket assembly (400) according to claim 4, wherein a connecting flange (43) is disposed at a connect position of the first body portion (41) and the first connecting portion (42), and the connecting flange (43) is perpendicular to the first body portion (41) and the first connecting portion (42); and
the connecting flange (43) is configured to break when a force applied to the connecting flange (43) exceeds a set threshold such that the first body portion (41) is separated from the first connecting portion (42).

6. The mounting bracket assembly (400) according to claim 1, wherein the number of the first brackets (40) is two, and two first brackets (40) are respectively connected to two sides of a front end of the inclined cooling module (30).

7. The mounting bracket assembly (400) according to claim 1, wherein the mounting bracket assembly (400) further comprises a second bracket (50), the second bracket (50) comprises a second body portion (51) and a second connecting portion (52), the second body portion (51) is connected to a sub-frame (200) of the vehicle, and the second connecting portion (52) is connected to the second body portion (51) and the inclined cooling module (30).

8. The mounting bracket assembly (400) according to claim 7, wherein the number of the second brackets (50) is two, and two second brackets (50) are respectively disposed at two sides of a rear end of the inclined cooling module (30).

9. The mounting bracket assembly (400) according to claim 7, wherein the second body portion (51) is an arc-shaped connecting bracket, an end portion of the arc-shaped connecting bracket is connected to the sub-frame (200), and a middle portion of the arc protrudes in a direction away from the sub-frame (200) and connected to the second connecting portion (52).

10. The mounting bracket assembly (400) according to claim 7, wherein the inclined cooling module (30) has a snap-fit member (31), and the snap-fit member (31) is detachably connected to the second connecting portion (52).

11. The mounting bracket assembly (400) according to claim 10, wherein the snap-fit member (31) comprises a snap-fit groove (32), the second connecting portion (52) passes through the snap-fit groove (32), and an inner surface of the snap-fit groove (32) is provided with an elastic bulge (33) protruding towards the second connecting portion (52) and being abutted against the second connecting portion (52).

12. The mounting bracket assembly (400) according to claim 7, wherein the second connecting portion (52) comprises a plurality of sub-connecting portions (521), the plurality of sub-connecting portions (521) are successively connected, and an annular groove (522) is provided at a connect position of any two adjacent sub-connecting portions (521).

13. The mounting bracket assembly (400) according to claim 7, wherein the first bracket (40) and the second bracket (50) are spaced apart in a front-to-rear direction of the vehicle.

14. An inclined cooling module assembly (300), comprising an inclined cooling module (30) and a mounting bracket assembly (400), wherein the inclined cooling module (30) is connected to the mounting bracket assembly (400), and the mounting bracket assembly (400) is the mounting bracket assembly (400) as defined in any one of claims 1 to 9.

15. A vehicle (1000), comprising a front-lower assistant cross member (100), a sub-frame (200), and the inclined cooling module assembly (300) as defined in claim 10; and wherein,
in a front-to-rear direction, the inclined cooling module assembly (300) is connected to the front-lower assistant cross member (100) at one side of the vehicle and is connected to the sub-frame (200) at another side of the vehicle.
